# DEMANDE DE BREVET EUROPEEN

(11) **EP 0 898 233 A1**
(43) Date de publication de la demande: **24.02.1999**
(21) Numéro de dépôt: 98420145.9
(22) Date de dépôt: 17.08.1998
(51) Int. Cl.: G06F 15/02

(54) **Dispositif permettant la conversion, pour une même grandeur, d'une unité en une autre unité**

(30) Priorité: 18.08.1997 FR 9710562
(71) Demandeur: ID PRO, 25000 Besancon (FR)
(72) Inventeur: Genestier, Gérard, 25000 Besancon (FR); Grammont, François, 25480 Misery Salines (FR); Majewski, Raymond, 25430 Sancey Le Long (FR)
(74) Mandataire: Hartmann, Jean-Luc

(57) **Abrégé**

Ce dispositif, muni d'un circuit intégré électronique (4), comporte un affichage (2) permettant d'afficher au moins deux nombres.

Il comporte en outre :
- un premier bouton-poussoir (8) pour commander des moyens permettant l'incrémentation d'un des deux nombres affichés, et
- un second bouton-poussoir (10) pour commander des moyens permettant la décrémentation d'un des nombres affichés.

## Description

La présente invention concerne un dispositif permettant la conversion, pour une même grandeur, d'une unité en une autre unité. Avec un tel dispositif, on peut par exemple, lorsque l'on dispose d'un prix exprimé en francs, convertir ce prix en tout autre monnaie. D'autres conversions sont bien entendu également envisageables : kilomètres en miles, litres en gallons, etc... ou inversement. Dans ces applications, il est généralement suffisant de se limiter à des nombres décimaux ne présentant que deux chiffres après la virgule. Il est aussi envisageable d'utiliser un tel dispositif pour convertir les centimètres relevés sur une carte en kilomètres réels.

Pour réaliser une telle conversion, il est connu d'utiliser une calculatrice à mémoire. Le taux de conversion est alors introduit en mémoire. Il suffit alors d'introduire la grandeur exprimée en une première unité, par exemple en francs, puis d'appuyer sur une touche pour obtenir la conversion de cette grandeur en une autre unité, par exemple en dollars.

L'inconvénient de ces calculatrices est notamment leur encombrement. En effet, une telle calculatrice comporte au moins treize touches - une touche pour chaque chiffre, une touche pour la virgule, une touche pour effectuer la conversion et une touche d'effacement - et un afficheur. Un espacement minimum doit être respecté entre chaque touche, ce qui fait que la calculatrice présente un encombrement relativement important. Le nombre important de touches a aussi une influence sur le coût de revient de la calculatrice. Plus le nombre de touches est important, plus le prix de la calculatrice sera élevé.

La présente invention a alors pour but de fournir un dispositif permettant la conversion, pour une même grandeur, d'une unité en une autre unité, présentant un coût et un encombrement minimum.

À cet effet, le dispositif qu'elle propose est un dispositif permettant la conversion, pour une même grandeur, d'une unité en une autre unité, muni d'un circuit intégré électronique, comportant un affichage permettant d'afficher au moins deux nombres.

Selon l'invention ce dispositif comporte en outre :
- au moins un premier bouton-poussoir pour commander des moyens permettant l'incrémentation d'un des deux nombres affichés, et
- au moins un second bouton-poussoir pour commander des moyens permettant la décrémentation d'un des nombres affichés.

Dans ce dispositif, la grandeur à convertir correspond à un nombre de l'affichage et la grandeur convertie correspond à l'autre nombre. L'utilisateur incrémente ou décrémente l'un des deux nombres et le résultat recherché est indiqué par l'autre nombre. Le circuit intégré électronique gère l'affichage ainsi que les moyens d'incrémentation et de décrémentation.

L'encombrement du dispositif peut être très réduit. En effet, deux touches et un double affichage suffisent : une touche permet d'agir sur les moyens d'incrémentation, l'autre sur les moyens de décrémentation et l'affichage permet de faire apparaître les deux nombres exprimant la grandeur dans deux unités distinctes.

Avantageusement, l'affichage utilisé est un afficheur double. Il est bien entendu aussi envisageable d'utiliser deux afficheurs simples.

Dans une forme de réalisation, le dispositif comporte un troisième bouton-poussoir pour commander les moyens permettant l'incrémentation d'un nombre affiché et un quatrième bouton-poussoir pour commander les moyens permettant la décrémentation d'un des nombres affichés.

Pour obtenir plus rapidement la valeur souhaitée en agissant sur les moyens d'incrémentation et de décrémentation, les premier et second boutons-poussoirs permettent l'incrémentation et la décrémentation d'un nombre en agissant sur deux chiffres significatifs. Pour agir sur deux chiffres significatifs, l'incrément utilisé est avantageusement variable. Il est multiplié par exemple par dix toutes les cent incrémentations.

Avantageusement les troisième et quatrième bouton-poussoirs permettent l'incrémentation et la décrémentation de deux chiffres significatifs supplémentaires.

Dans une autre forme de réalisation, le dispositif peut comporter uniquement un troisième bouton-poussoir permettant d'agir par incrémentation sur un troisième chiffre significatif.

Pour éviter d'agir par impulsions sur les moyens d'incrémentation et de décrémentation, le dispositif comporte de préférence un temporisateur. Ainsi, si on agit pendant un certain temps d'attente sur ces moyens, l'action est répétée automatiquement.

Avantageusement, le temporisateur comporte plusieurs temps d'attente.

Dans un mode de réalisation préférentiel, le dispositif comporte en outre un bouton de remise à zéro.

Afin d'en diminuer le coût, le circuit intégré électronique utilisé dans le dispositif selon l'invention peut être un microprocesseur 4 bits. Il pourrait également s'agir d'un ASIC (Applied Specifical Integrated Circuit ou circuit intégré à utilisation spécifique).

De toute façon l'invention sera bien comprise à l'aide de la description qui suit, en référence au dessin schématique annexé représentant à titre d'exemple non limitatif un mode de réalisation d'un dispositif selon l'invention.
Figure 1 est un schéma fonctionnel d'un premier dispositif selon l'invention, et
Figure 2 correspond à la figure 1 pour une variante de réalisation du dispositif selon l'invention.

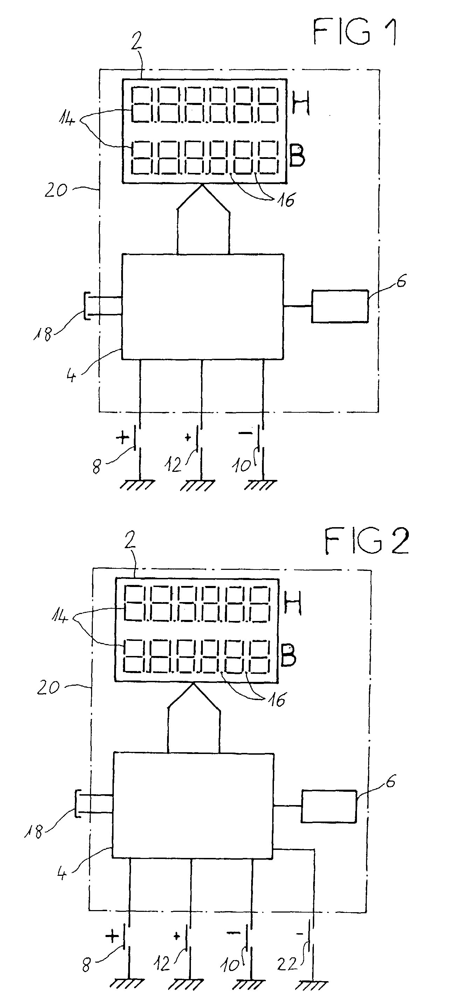

La figure 1 représente un écran 2 à double affichage, un microprocesseur 4, une source d'alimentation 6 pour ce microprocesseur et trois boutons-poussoirs 8, 10, 12.

L'écran 2 est un écran à cristaux liquides connu sous le nom d'écran LCD. Il comporte deux lignes de six caractères numériques 14 séparés par une virgule 16. Cet écran permet d'afficher deux nombres entiers ou décimaux avec six chiffres significatifs.

Le microprocesseur 4 utilisé est un microprocesseur à quatre bits. Il permet de piloter l'ensemble des éléments du dispositif selon l'invention. Il est d'une taille très réduite et est d'un coût très bas.

La source d'alimentation 6 délivre de préférence une tension comprise entre 2 et 3 Volt. Il peut s'agir par exemple d'une pile au lithium, d'une batterie, d'une cellule solaire, etc...

Chaque bouton-poussoir 8, 10, 12 est un bouton-poussoir à contact simple (mise à un potentiel). Ces boutons 8, 10, 12 permettent à un utilisateur de donner des instructions au microprocesseur 4. Un bouton de remise à zéro 18 est également prévu.

Tous les éléments décrits ci-dessus sont disposés dans un boîtier 20 représenté au dessin en trait mixte. Un logiciel est enregistré dans le microprocesseur 4 et permet le fonctionnement du dispositif. Ce logiciel est constitué de plusieurs algorithmes qui vont être décrits ci-après.

Un premier algorithme, ou algorithme principal du logiciel, permet de proposer successivement deux menus à la mise sous tension du dispositif selon l'invention ou suite à une remise à zéro par action sur le bouton 18.

Le premier menu (menu 1) demande à l'utilisateur de donner le taux de conversion suivant un algorithme spécifique (algo 4) décrit plus en détails ci-après.

Le deuxième menu (menu 2) permet de faire évoluer les nombres affichés sur l'écran 2. La ligne du haut de l'écran est repérée par la lettre H tandis que la ligne du bas est repérée par la lettre B. Trois algorithmes (algo 1, algo 2, algo 3) permettent de faire varier le nombre affiché à l'écran sur une ligne, par exemple la ligne H. Un autre algorithme (algo 5) permet la gestion du nombre affiché sur la seconde ligne de l'écran 4, la ligne B dans l'exemple donné.

Le passage du menu 1 au menu 2, et dans ce sens uniquement, s'effectue en appuyant simultanément sur les boutons-poussoirs 8 et 10, une fois que le menu 1 (définition du taux de conversion) est terminé.

Algo 1 est un algorithme de comptage à incrément variable automatique. Son objectif est de permettre à l'utilisateur d'atteindre une valeur quelconque entre 0,00 et 990 000 en un minimum de temps, avec un maximum de souplesse et en l'absence de clavier numérique.

Au départ, le nombre zéro est affiché sur la ligne H. Chaque appui de l'utilisateur sur le bouton-poussoir 8 incrémente le nombre affiché sur la ligne H de 0,01. Le nombre affiché sur la ligne H est incrémenté de 0,01 jusqu'à ce qu'il atteigne la valeur de 1,00. L'incrément est alors multiplié par 10. Le nombre affiché sur la ligne H est alors incrémenté à chaque fois de 0,1. Cet incrément de 0,1 est utilisé jusqu'à ce que l'on atteigne la valeur de 10,00. L'incrément est ainsi multiplié par dix toutes les cent incrémentations. La décrémentation en agissant sur le bouton-poussoir 10 s'effectue dans la même logique.

On obtient ainsi par incrément de 0,01 les valeurs 0,00 ; 0,01 ; 0,02 jusqu'à 0,98 ; 0,99 et 1,00.

Par incrément de 0,10 on obtient les valeurs 1,00 ; 1,10 ; 1,20 jusqu'à 9,80 ; 9,90 et 10,00.

On incrémente ainsi de suite le nombre affiché sur la ligne H jusqu'à ce que l'incrément soit de 10 000. Le nombre affiché sur la ligne H varie alors de 100 000 à 990 000.

Comme on peut le constater, on travaille ainsi toujours avec un nombre présentant deux chiffres significatifs. Le nombre affiché sur la ligne H est donc un nombre entier de deux chiffres multiplié par une puissance de 10.

L'algorithme algo 2 permet de gérer la vitesse de prise en compte des actions de l'utilisateur sur les boutons-poussoirs 8, 10, 12. L'objectif de cet algorithme est de réguler la vitesse de comptage lorsqu'un bouton-poussoir reste appuyé.

Dans cet algorithme, un temps d'attente de base est fixé à trois cents millisecondes entre chaque opération. Ce temps de trois cents millisecondes ainsi que les autres durées indiquées ci-après sont donnés à titre indicatif.

Si un bouton-poussoir reste actionné pendant au moins dix incrémentations, le temps d'attente passe de trois cents millisecondes à cent millisecondes pour les dix opérations suivantes. Puis, si le même bouton-poussoir reste toujours appuyé, on passe alors à un temps d'attente de cinquante millisecondes pour les vingt-cinq opérations suivantes. On continue ainsi jusqu'à ce que le temps d'attente ne soit plus compressible. Ce temps d'attente minimum dépend du temps minimum d'exécution du programme chargé dans le microprocesseur 4.

Grâce à cet algorithme algo 2, plus on appuie longtemps sur un bouton-poussoir, plus le comptage s'effectue rapidement, c'est-à-dire que le nombre affiché sur la ligne H (ou bien sur la ligne B) augmente ou diminue rapidement. On disposera par exemple de quatre vitesses d'incrémentation ou décrémentation différentes.

Cet algorithme permet d'afficher rapidement sur la ligne H (ou sur la ligne B) le nombre qui intéresse l'utilisateur.

Pour optimiser encore la vitesse d'affichage du nombre choisi, l'algorithme prévoit de pouvoir affiner rapidement ce nombre.

Ainsi par exemple si on veut afficher le nombre 1 000, on appuie sur un bouton-poussoir 8 ou 10 pendant un certain temps. Le nombre affiché sur la ligne H défile rapidement. Nous supposerons qu'il défile avec la vitesse la plus rapide, c'est-à-dire la vitesse 4. Lorsque l'utilisateur relâche le bouton-poussoir 8 ou 10, le nombre affiché n'est pas forcément le nombre 1 000. Il faut donc ajuster le nombre affiché en réappuyant sur le bouton-poussoir 8 ou 10. L'incrémentation ne se fera pas à la vitesse 1, c'est-à-dire la vitesse la plus lente, mais se fera à la vitesse 3. L'incrémentation est donc ralentie mais elle est ralentie progressivement. De cette façon, lorsqu'on a atteint la vitesse maximale, dans l'exemple la vitesse 4, il faut alors appuyer quatre fois de façon brève sur un bouton-poussoir pour repasser à la vitesse de comptage la plus lente. L'intérêt est alors de visualiser au mieux l'évolution du comptage sur l'écran 2 sans pour autant trop ralentir la progression du nombre affiché.

L'algorithme algo 3 concerne le troisième bouton-poussoir 12. Cet algorithme a pour objectif d'améliorer la souplesse de l'algorithme algo 1. On a vu précédemment que l'algorithme algo 1 permet de faire évoluer le nombre indiqué sur la ligne H avec toujours deux chiffres significatifs. Algo 3 permet de gérer, à l'aide du bouton-poussoir 12, un troisième chiffre significatif. Ce troisième chiffre significatif ne peut être qu'incrémenté.

À la dixième pression sur le bouton-poussoir 12 le troisième chiffre revient à sa valeur initiale sans qu'il y ait pour autant incrémentation du nombre à deux chiffres significatifs.

Si le troisième chiffre significatif est différent de zéro, une action sur le bouton-poussoir 8 fait passer ce troisième chiffre significatif à zéro, tandis qu'une action sur le bouton-poussoir 10 fait passer ce troisième chiffre significatif à zéro et décrémente le nombre à deux chiffres significatifs.

L'algorithme algo 3 permet donc, en combinaison avec l'algorithme algo 1 d'afficher des nombres compris entre 0,00 et 999 000.

L'algorithme algo 4 permet de définir et de saisir le taux de conversion. Ce taux de conversion est une constante. Il est égal au rapport du nombre affiché sur la ligne B par le nombre affiché sur la ligne H.

On choisit par exemple d'afficher le nombre 1 sur la ligne H. Le taux de conversion X est alors directement indiqué sur la ligne B. Il comprend par exemple six chiffres significatifs et une virgule flottante. On saisit alors un premier nombre X. Le nombre X est choisi à l'aide des boutons-poussoirs 8, 10, 12 et 22.

Pour afficher X plus facilement, on le décompose par exemple en deux nombre Y et Z tels que X=1000.Y+Z. On saisit tout d'abord Y à l'aide des boutons 8 et 10 et on valide à l'aide d'un bouton 12 ou 22. Puis on saisit Z de la même manière en validant. Il suffit ensuite de placer la virgule flottante à l'aide des boutons 8 et 10 et de valider avec l'un des boutons 12 ou 22.

Par exemple, si l'on veut convertir des gallons en litres, sachant qu'un gallon correspond à 3,785 litres, on choisira Y = 378 et Z = 500. Puis la virgule sera placée entre le 3 et le 7. On aura alors le nombre 3,78500 affiché sur la ligne B de l'écran 2.

L'algorithme algo 5 permet de calculer la conversion. Il a pour objectif de calculer de la façon la plus simple possible, à l'aide du taux de conversion saisi grâce à l'algorithme algo 4, la valeur recherchée. Le nombre affiché par exemple sur la ligne H, défini dans algo 1, s'incrémente d'unité en unité. Le taux de conversion saisi à l'aide de l'algorithme algo 4 permet de définir un incrément de base non unitaire. Ainsi par exemple si la ligne H affiche un nombre correspondant à un volume exprimé en gallons, alors la ligne B affiche un nombre correspondant au même volume mais exprimé en litres. Le nombre affiché sur la ligne B s'incrémentera de 3,79 lorsque le nombre affiché sur la ligne H s'incrémentera de 1. Le logiciel enregistré dans le microprocesseur 4 n'effectue donc pas une multiplication mais une incrémentation.

Le logiciel peut aussi contenir un algorithme algo 6 permettant d'inverser le taux de conversion saisi à l'aide de l'algorithme algo 4. Dans l'algorithme principal du logiciel, le passage de menu 1 à menu 2 s'effectue en appuyant simultanément sur les boutons-poussoirs 8 et 10. On suppose alors par exemple que une action sur les boutons-poussoirs 8, 10 et 12 incrémente le nombre affiché sur la ligne H. Si on appuie alors simultanément sur les boutons-poussoirs 8 et 10 par exemple, il est alors possible d'incrémenter le nombre affiché sur la ligne B. Ceci correspond à effectuer la conversion dans le sens inverse de celle saisie au départ. Algo 6 permet de faire une division et donc de calculer le taux de conversion inverse nécessaire ici. Ce calcul se fait en calculant l'inverse du taux de conversion. De cette manière, dans l'exemple donné précédemment, il est alors possible de convertir des litres en gallons.

La figure 2 montre une variante de réalisation du dispositif de conversion décrit ci-dessus. Sur cette figure, les mêmes références sont utilisés pour identifier des éléments semblables.

La différence entre la figure 2 et la figure 1 est la présence d'un bouton supplémentaire 22. Il s'agit là aussi d'un bouton poussoir à contact simple permettant de donner des instructions au microprocesseur. Le dispositif ainsi représenté permet de travailler avec quatre chiffres significatifs. Les boutons 8 et 10 sont utilisés pour incrémenter et décrémenter les deux premiers chiffres significatifs tandis que les deux boutons 12 et 22 sont utilisés pour l'incrémentation et la décrémentation des deux chiffres significatifs supplémentaires.

Algo 1 et algo 2 ne sont pas modifiés. Algo 3 qui permettait la gestion d'un chiffre significatif supplémentaire est remplacé ici par algo 3' qui gère les deux chiffres significatifs supplémentaires, dans le sens d'une incrémentation et d'une décrémentation.

L'algorithme algo 3' prévoit qu'une pression sur le bouton 12 provoque une incrémentation des deux chiffres significatifs supplémentaires, tandis qu'une décrémentation de ces chiffres est réalisée par pression sur le bouton 22. L'algorithme algo 2 peut être utilisé ici aussi pour gérer la vitesse de défilement.

Lorsque les deux chiffres significatifs passent de 99 à 00 lors d'une incrémentation, ou bien de 00 à 99 lors d'une décrémentation, on peut soit prévoir que les deux premiers chiffres significatifs ne sont pas influencés, soit prévoir une incrémentation ou une décrémentation de ces deux premiers chiffres.

Dans le premier cas, on peut alors prévoir que si les deux chiffres significatifs supplémentaires sont différents de 00, une action sur l'un des boutons 8 ou 10 fasse passer ces deux chiffres supplémentaires à 00.

L'algorithme algo 3' permet donc, en combinaison avec l'algorithme algo 1, d'afficher des nombres compris entre 0,00 et 999 900. Le dispositif de conversion est volontairement limité à deux chiffres après la virgule. Ceci est généralement suffisant pour les besoins de la vie courante : conversion de litres en gallons ou bien de francs dans une autre monnaie, etc.

Les autres algorithmes ne sont pas modifiés.

Le dispositif selon l'invention est alors un dispositif convivial permettant dans un encombrement réduit et pour un prix très modique de réaliser la conversion d'une grandeur exprimée en une unité dans une autre unité. Le dispositif peut se présenter par exemple sous la forme d'un boîtier 20 présentant sur une face l'écran 2 à double affichage et les quatre boutons-poussoirs 8, 10, 12, 22 tandis que sur une face opposée à cette première face, se trouve le bouton 18 de remise à zéro.

Un autre avantage de ce dispositif est qu'il permet à l'utilisateur d'avoir simultanément sous les yeux les deux valeurs que prend la grandeur dans les deux unités distinctes. Ainsi, dans l'exemple ci-dessus, l'utilisateur voit simultanément à quel volume en litres correspond le volume en gallons affiché. Ces deux valeurs évoluent parallèlement. On a toujours simultanément la valeur entrée par l'utilisateur et le résultat recherché.

Comme il va de soi, l'invention n'est pas limitée aux modes de réalisation décrits ci-dessus à titre d'exemples non limitatifs, mais elle en embrasse au contraire toutes les variantes.

Ainsi par exemple, il est envisageable d'avoir un taux de conversion fixe, ne pouvant pas être modifié et qui est entré une fois pour toute dans le logiciel. On obtient alors un dispositif permettant par exemple de convertir des litres en gallons ou des gallons en litres ou d'effectuer toute autre conversion ayant un taux fixe, telle par exemple la conversion de francs ou d'une autre monnaie européenne en euros.

L'incrémentation des nombres affichés sur l'écran peut être différente. Le nombre affiché incrémenté, comme décrit ci-dessus comporte deux, trois ou quatre nombres significatifs. On peut bien entendu avoir un nombre incrémenté comportant plus de chiffres significatifs. L'incrément au lieu d'être variable pourrait être fixe. Il pourrait également s'agir d'un nombre différent de un ou des autres puissances de dix.

Le dispositif décrit comprend trois ou quatre boutons-poussoirs. Deux boutons-poussoirs peuvent suffire pour réaliser un dispositif selon l'invention. Les trois et quatrième bouton-poussoirs sont prévus dans le dispositif selon l'invention pour apporter un plus grand confort d'utilisation à l'utilisateur.

Dans les exemples ci-dessus, la fonction programmée est une fonction linéaire, passant par l'origine. Il est également possible de programmer des fonctions affines, ne passant pas par l'origine. Une telle fonction affine permet alors par exemple la conversion de degrés Celsius en degrés Fahrenheit. Il suffit d'introduire une constante supplémentaire dans le circuit intégré du dispositif.

## Revendications

1. Dispositif permettant la conversion, pour une même grandeur, d'une unité en une autre unité, muni d'un circuit intégré électronique (4), comportant un affichage (2) permettant d'afficher au moins deux nombres, **caractérisé en ce qu**'il comporte en outre :
- au moins un premier bouton-poussoir (8) pour commander des moyens permettant l'incrémentation d'un des deux nombres affichés, et
- au moins un second bouton-poussoir (10) pour commander des moyens permettant la décrémentation d'un des nombres affichés.

2. Dispositif selon la revendication 1, caractérisé en ce qu'il comporte un afficheur (2) double.

3. Dispositif selon la revendication 1 ou 2, caractérisé en ce qu'il comporte un troisième bouton-poussoir (12) pour commander les moyens permettant l'incrémentation d'un nombre affiché et un quatrième bouton-poussoir (22) pour commander les moyens permettant la décrémentation de ce nombre affiché.

4. Dispositif selon la revendication 1, caractérisé en ce que les premier et second boutons-poussoirs (8,10) permettent l'incrémentation et la décrémentation d'un nombre en agissant sur deux chiffres significatifs.

5. Dispositif selon les revendications 1, 3 et 4, caractérisé en ce que les troisième et quatrième bouton-poussoirs (12,22) permettent l'incrémentation et la décrémentation de deux chiffres significatifs supplémentaires.

6. Dispositif selon la revendication 1, caractérisé en ce qu'il comporte un troisième bouton-poussoir (12) permettant d'agir par incrémentation sur un troisième chiffre significatif.

7. Dispositif selon l'une des revendications 1 à 6, caractérisé en ce qu'il comporte un temporisateur.

8. Dispositif selon la revendication 7, caractérisé en ce que le temporisateur comporte plusieurs temps d'attente.

9. Dispositif selon l'une des revendications 1 à 8, caractérisé en ce qu'il comporte en outre un bouton de remise à zéro (18).

10. Dispositif selon l'une des revendications 1 à 9, caractérisé en ce que le circuit intégré électronique est un microprocesseur (4) à 4 bits.
